# EUROPEAN PATENT SPECIFICATION

(11) **EP 0 751 923 B1**
(45) Date of publication and mention of the grant of the patent: **29.12.1999**
(21) Application number: 95912337.3
(22) Date of filing: 22.03.1995
(51) Int. Cl.: C05F 11/08, C05F 17/00

(54) **ENHANCED BIOLOGICAL DEGRADATION OF ORGANIC WASTE SYSTEMS**
VERBESSERTER BIOLOGISCHER ABBAU VON ORGANISCHEN ABFÄLLEN
AMELIORATION DE LA DEGRADATION BIOLOGIQUE DE SYSTEMES ORGANIQUES RESIDUAIRES

(30) Priority: 22.03.1994 GB 9405631
(43) Date of publication of application: 08.01.1997
(73) Proprietor: BioTal Limited, Cardiff CF4 5DL (GB)
(72) Inventor: MANN, Stephen, Philip, Harston Cambridgeshire CB2 5QQ (GB); WARD, John, Stewart, Gwaelod-y-Garth Mid-Glamorgan CF4 8SR (GB)
(74) Representative: Perry, Robert Edward
(86) International application number: GB9500650
(87) International publication number: WO9525707

(56) References cited:
- EP-A- 0 083 267
- EP-A- 0 586 004
- US-A- 4 032 318
- US-A- 5 145 779
- DATABASE WPI Section Ch, Week 9209 Derwent Publications Ltd., London, GB; Class A96, AN 92-068582 & JP,A,04 011 887 ( CENTRAL GLASS KK) , 16 January 1992
- DATABASE WPI Section Ch, Week 9108 Derwent Publications Ltd., London, GB; Class B04, AN 91-054447 & JP,A,03 004 791 ( KANEBO KK) , 10 January 1991

## Description

### Field of Invention

This invention relates to the biological degradation of agricultural, industrial, garden and domestic waste by the application of selected micro-organisms, and to enzymatically-active compositions for use in the degradation of organic wastes.

### Background of the Invention

Domestic, agricultural industrial and municipal waste is a growing problem. The general increase in domestic waste, including degradable organic materials such as paper, manure, vegetable waste and grass cuttings, has led to problems of disposal. One solution is to place such organic material in large landfill sites, but this has caused a considerable problem and hazard, owing to the continuous and uncontrolled release of methane and other gases. Limited use of land available for landfill exacerbates the problem. As a result, there has been an increasing emphasis on domestic and municipal recycling, of which one route is composting of the biodegradable fraction.

An object behind the present invention is to enhance this biological degradation of the material, thereby converting it to a material more suitable for use in many aspects of horticulture, agriculture and landscaping.

The presentation of such products is undeniably important and to date it has not been proved possible to produce in a liquid form products where the enzymes and micro-organisms are present together in liquid suspensions. Historically, attempts to do this have resulted in either a rapid deterioration in the cell counts due to the incorporation of enzyme stabilisers, or the enzymes have rapidly disappeared as the bacteria have assimilated their protein matrices.

WO-A-9210945 discloses a formulation of enzymes and micro-organisms. That formulation is designed to enhance, *inter alia,* the nutritive value of silage. The enzymes exclude cellulases and hemicellulases.

US-A-4032318 discloses a powdered composting formulation comprising microorganisms, enzymes and materials rich in proteins and carbohydrates, and mixing the composition with water immediately before application.

### Summary of the Invention

According to the present invention, a liquid formulation comprises:
one or more enzymes capable of degrading organic material;
spores of one or more micro-organisms capable of growth on the product(s) of the enzymatic degradation;
an agent that prevents the germination of spores; and
optionally, an enzyme stabiliser.

In the invention, enzymes and micro-organisms are used to biologically degrade organic components. The enzymes have activities capable of degrading one or more of the components in addition to providing nutrients to the degrading bacteria. The bacterial micro-organisms are capable of growth, thereby producing additional enzyme activities, and also heat. Selected fungal components are capable of breaking down the more indigestible lignin content of woody material, providing an additional nutrient source for bacterial activity.

The invention is based on the realisation that the rate of decomposition may be increased by ensuring that sufficient numbers of selected micro-organisms are present throughout the treated system, for successful competition, and that the necessary nutrients and conditions should be present. In the process, the desirable organism will proliferate throughout the material, thereby excluding the less efficient or detrimental organisms.

The desired organisms are stabilised in the presence of the enzymes in a liquid formulation, by first fermenting the cells as a preparation of thermostable spores. The spores are stabilised in the formulation, and prevented from germination by the presence of bacteriostatic compounds and/or creation of a high osmotic pressure. The enzymes are stabilised by the presence of the same osmotic stabilisers while being protected from degradation by bacteria from the same bacteriostatic compounds.

### Description of the Invention

In use of a composition of the invention, optimum conditions depend on the presence of the correct micro-organisms, and the use of the enzymes to establish rapid breakdown of, say, plant cell walls, thereby releasing nutrients for the micro-organisms. The appropriate enzymes will break down plant and animal wastes during the composting process. During this initial breakdown, nutrients are generated to produce a medium that is conducive to the rapid proliferation of the organisms that are also provided. In addition, the growth of the bacteria achieves elevated temperatures in the degrading material, without initially affecting their numbers, but reduces undesirable components such as non-beneficial micro-organisms and weed seeds.

The enzymes will be selected according to the nature of the material to be processed. They may be adapted to the breakdown of plant cell walls and also to the breakdown of animal wastes. In predominantly woody material, the application of selected wood-degrading fungal strains will convert this normally indigestible component to a more accessible nutrient form for the bacteria.

The initial breakdown of the material having been achieved, the enzymes continue to function in increasing activities, as the temperature of fermentation rises. Enzymes and microbes having a high thermo-tolerance, e.g. above 35° or 40°C, are preferred. Enzymes capable of releasing sugars from the complete spectrum of plant and animal polysaccharides, since the components of the material will often include disaccharides and polysaccharides, are usually selected. Examples of such enzymes include cellulases, amylases, xylanases, galactanases, mannanases, arabanases, β-1,3-1,4-glucanases and the appropriate glucosidases and xylosidases. Enzymes releasing amino-acids beneficial for the biodeterioration process are also preferably included. Where a substantial proportion of the waste to be composted is of domestic origin, lipases will also usually be present in the formulation. Plant cell mass is further disrupted by the inclusion of enzymes capable of breaking down pectin and pectin esters; this has the additional advantage of allowing the micro-organisms to penetrate well into the cell biomass. In the case of leaves, a greater proportion of the enzyme component will consist of ligninases and hemi-cellulases.

Owing to the high level of methane that is produced when they are placed in landfill sites, the composting of grass cuttings presents a particular problem. The present invention is well adapted to the composting of grass cuttings, in which case it will include enzymatic activities capable of degrading celluloses and/or hemicelluloses.

Substrates to which formulations of this invention are applied will generally contain cellulose. It is therefore particularly preferred that the novel formulation comprises cellulase, i.e. endo-1,4-β-glucanase (Enzyme Commission No. 3.2.1.4), and/or cellulose 1,4-β-cellobiosidase (EC 3.2.1.91). Xylanase activity is also particular preferred.

Other enzymes that may be present are listed in WO-A-9210945, the contents of which are incorporated herein by reference. For example, proteases and lipases may be chosen for certain substrates, while pectinase activity may be desirable for treating grass clippings.

The enzyme component can have a prolonged activity. This can be achieved by the selection of enzymes of demonstrated durability and thermostability, and of bacterial organisms that produce heat, to raise the enzymes' activity close to their thermal optimum.

Compost heap reduction and bacterial pasteurisation are also achieved in the long term by the microbial component which, as the cells proliferate, begins to produce enzymes of the types added in the original inoculum. Bacterial strains are selected for their rapid rate of growth, and their propensity to produce considerable amounts of extra-cellular enzymes. Strains may be selected for their ability to dominate a wide range of composting environments or for the ability to breakdown specific waste fractions. In woody environments, fungal strains will tend to dominate initially, before bacterial organisms contribute to the degradation process.

For the composting of materials, the inclusion of micro-organisms capable of fixing nitrogen may give an impetus to the fermentation of such materials, and improve compost quality. This may be particularly appropriate if the components and/or the enzymes are such that the enzymatic activities do not give an assimilable source of nitrogen for growth of the micro-organisms.

The micro-organisms may be facultative, anaerobic or acerobic. Aerobic organisms such as fungi may be preferred.

The micro-organisms may be selected from the genera *Bacillus, Clostridium, Streptomyces, Phaneromyces, Phanerochaete* and *Aspergillus.* Nitrogen-fixing micro-organisms may be selected from *Clostridium, Rhizobium and Azotobacter.*

Specific examples of materials which may be composted by means of the present invention are grass clippings, leaf litter, wood chippings, mixed domestic waste or municipal solid waste. Grass clippings are an example of waste which is seen as a particular problem.

For use in the invention, a composition is suitably prepared as an inoculum of the enzymes and organisms. Typical additional components of such an inoculum are nutrient additives, e.g. supplemental carbon and nitrogen sources, and inert bulking agents.

Where spore-forming organisms are a part of the formulation, such enzyme and spore preparations may be stabilised, providing that the microbial component has been prepared as near as possible to give 100% spores which are both resistant and viable. Such spores will not germinate in pure aqueous solutions, but will in the enriched solutions that are typical of liquid enzyme preparations.

Stabilisation may also be achieved by formulating products that include osmotic stabilisers such as salts or other miscible compounds, e.g. sodium chloride or glycerol, to protect the enzymes. Such additives are also able to prevent the germination of spores and thus protect the enzyme from bacterial contamination by other invading organisms. Bateriostatic compounds (e.g. sodium benzoate) enhance the repression of bacterial spore germination, especially when the osmotic pressure required for stabilisation of enzymes is relatively low.

Similar preparations may be made and stabilised with fungi. This is achieved either by modifications to submerged fermentations, in order to induce thicker spore walls or to encourage the formation of perithicial spore structures with reduced mycelial biomass. Again, these preparations may be prevented from germination by inclusion of either or both osmotic stabilisers and other compounds to reduce germination; again, sodium benzoate may be the compound of choice.

Fungal spore preparation is often difficult, and in the case of some organisms spore formation may need to be stimulated to produce adequate numbers of spores at fermentation sizes in excess of 5 litres. For example, in the case of *Phanerochaete,* spore production is only adequately stimulated by the presence of lignin in the fermentation medium. However, spores prepared in this way may be readily stabilised in the presence of osmotic stabilisers such viscous gums (e.g. xanthan, guar, CMC etc.); each fungus has to be treated individually to maximise spore fermentation, but other factors may also have to be introduced. For example, the genus *Ophiostioma* has to undergo a period of spore wall thickening before stabilisation achieved by feeding of selected carbon sources during the final stages of fermentation.

Following these procedures, all of which may be conducted by means familiar to the skilled man, viable bacterial and fungal cells may also be preserved by freeze-drying.

The following Examples illustrate the invention.

### Example 1

An inoculum was prepared from (a) enzymes capable of hydrolysing cellulose, glucans, xylans, mannans, galactans, starch, as well as proteins and the components of pectin, and (b) two micro-organisms, one a *Bacillus* spp., the other a *Streptomyces* spp., specially selected for their enzyme and thermal productive capabilities. Sugar (sucrose) and bentonite were used to give the product bulk.

The inoculum was used to treat grass clippings, and a control experiment (without inoculum) was also run. A desirable effect was achieved by the use of inoculum, in terms of sugar production, volume reduction and temperature increase and stabilisation.

### Example 2

A formulation was made comprising cellulase, 1,4-β-cellobiosidase and xylanase activities at least, thermophilic *Bacillus* sp., 1% sodium benzoate, sugar and bentonite. This formulation showed stability; a reading of c.8.0 log CFU/ml was recorded at various times over 50 weeks.

Lawn clippings from a playing field were placed in two composting containers of about 70 l capacity. One of the containers was inoculated with the formulation.

The bins were monitored for temperature, heap reduction and release of fermentable sugars as an indication of enzymatic action. It was found that the temperature in the treated bin was consistently higher over 120 hours than that of the control; the heap reduction was faster and greater after inoculation than in the control; there was an increased release of fermentable sugars in the treated bin (>26 g/l after 1 day compared with <15 g/l in the control, both decreasing to close to zero after 3 days). These results show that inoculation can positively influence the natural process of composting grass clippings.

In a second test, a mixture of garden and household waste was shredded and placed in two compost containers. One container was inoculated with the formulation.

The material was monitored for heat production and turned every 4 days until no rises in temperature were observed. Material was followed through to completion of a dry friable humous material. The treated heap reached this mature phase in approximately 3 weeks compared to over 6 weeks for the control. Increased temperatures were recorded in the treated heap (43°C after 5 days) compared to the control (35°C after 5 days), after turning, in the first week. This shows that inoculation can positively influence the composting of mixed garden and household waste.

In a third test, farm waste consisting of used straw-based winter cattle bedding was shredded and formed into two windrows of approximately 25 tonnes each. One windrow was inoculated with a bacterial enzyme mix using a backpack sprayer as the windrow was formed.

The windrows were monitored for temperature and other physical and chemical parameters, to assess the rate at which the material was composting. Over 40 days, the treated windrow reached higher and more sustained temperatures compared to the control. This shows that inoculation with a bacterial and enzyme mix can influence the course of the natural composting of cattle bedding wastes.

In a fourth test, large windrows of approximately 30 tonnes of leaf and woody type waste were formed. One windrow was inoculated with the enzyme and bacterial mix and both windrows were monitored for temperature. The inoculated heap reached higher and more sustained temperatures (c. 65°C after 5 days, falling to c. 30°C after 23 days) than the untreated control (c. 58°C after 5 days falling to c. 20°C after 20 days).

This trial showed that the composting of wood and leaf type wastes can be influenced by the addition of a specific inoculum, and that inoculation can decrease the time required to convert this type of waste into an acceptable compost.

## Claims

1. A liquid formulation comprising:
one or more enzymes capable of degrading organic material;
spores of one or more micro-organisms capable of growth on the product(s) of the enzymatic degradation;
an agent that prevents the germination of spores; and
optionally, an enzyme stabiliser.

2. A formulation according to claim 1, wherein the agent prevents the proliferation of vegetative cells of micro-organisms, such as bacteria, fungi and yeasts.

3. A formulation according to claim 1 or claim 2, wherein the agent is an osmotic stabiliser and/or bacteriostat.

4. A formulation according to any preceding claim, wherein the agent and the enzyme stabiliser are selected from alginates, carboxymethylcellulose, xanthan gum, gum guar, sodium chloride, a benzoate, (sodium) metabisulphate, and glycerol, any of which may act to prevent spore germination and enzyme breakdown.

5. A formulation according to any preceding claim, which additionally comprises one, two or all of carbon sources, nitrogen sources and inert bulking agents.

6. A formulation according to any preceding claim, which additionally comprises NH₄SO₄.

7. A formulation according to any preceding claim, wherein the enzymes include a protease.

8. A formulation according to any preceding claim, wherein the enzymes include a lipase.

9. A fbrmulation according to any preceding claim, wherein the enzymes include a pectinase.

10. A formulation according to any preceding claim, wherein the enzymes include a cellulase and/or a hemicellulase.

11. A formulation according to any preceding claim, wherein the micro-organisms are selected from the genera *Azotobacter, Rhizobium, Rhizopus, Thermomonospora,* *Bacillus, Clostridium, Streptomyces, Phanerochaete, Ophiostoma, Trichoderma* and *Aspergillus.*

12. A formulation according to any preceding claim, wherein one or more of the micro-organisms are capable of fixing nitrogen.

13. A formulation according to claim 12, wherein the or each nitrogen-fixing micro-organism is selected from the genera *Bacillus, Clostridium, Rhizobium* and *Azotobacter.*

14. A formulation according to any of claims 11 to 13, wherein the micro-organisms include *Thermomonospora fusca* and *Phanerochaete.*

15. A formulation according to any preceding claim, which comprises fungal components capable of digesting lignin, cellulose and/or hemicellulose.

16. A method of degrading material comprising organic components, which comprises treating the material with a formulation according to any preceding claim.

17. A method according to claim 16, wherein the material to be treated comprises horticultural or garden waste, grass clippings, leaf litter, wood chippings, mixed domestic waste or municipal solid waste.

18. A method according to claim 17, wherein the material comprises grass clippings.

## Patentansprüche

1. Flüssige Formulierung, umfassend:
ein oder mehrere Enzym(e), welche(s) imstande ist bzw. sind, organisches Material abzubauen;
Sporen eines Mikroorganismus oder mehrerer Mikroorganismen, welche(r) imstande ist bzw. sind, auf dem oder den Produkt(en) des enzymatischen Abbaus zu wachsen;
ein Agens, welches die Sporenkeimung verhindert; und, gegebenenfalls, einen Enzymstabilisator.

2. Formulierung nach Anspruch 1, worin das Agens die Proliferation pflanzlicher Zellen von Mikroorganismen, wie z.B. Bakterien, Pilzen und Hefen, verhindert.

3. Formulierung nach Anspruch 1 oder Anspruch 2, worin das Agens ein osmotischer Stabilisator und/oder ein Bakteriostatikum ist.

4. Formulierung nach irgendeinem der vorhergehenden Ansprüche, worin das Agens und der Enzymstabilisator ausgewählt sind aus Alginaten, Carboxymethylcellulose, Xanthangummi, Guargummi, Natriumchlorid, einem Benzoat, (Natrium)metabisulfat und Glycerin, wovon ein jedes zur Verhinderung von Sporenkeimung und Enzymabbau wirken kann.

5. Formulierung nach irgendeinem der vorhergehenden Ansprüche, welche ferner eines, zwei oder alle von Kohlenstoffquellen, Stickstoffquellen und inerten Füllmitteln umfaßt.

6. Formulierung nach irgendeinem der vorhergehenden Ansprüche, welche ferner NH₄SO₄ umfaßt.

7. Formulierung nach irgendeinem der vorhergehenden Ansprüche, worin die Enzyme eine Protease einschließen.

8. Formulierung nach irgendeinem der vorhergehenden Ansprüche, worin die Enzyme eine Lipase einschließen.

9. Formulierung nach irgendeinem der vorhergehenden Ansprüche, worin die Enzyme eine Pektinase einschließen.

10. Formulierung nach irgendeinem der vorhergehenden Ansprüche, worin die Enzyme eine Cellulase und/oder eine Hemicellulase einschließen.

11. Formulierung nach irgendeinem der vorhergehenden Ansprüche, worin die Mikroorganismen aus den Gattungen *Azotobacter, Rhizobium, Rhizopus, Thennomonospora, Bacillus, Clostridium, Streptomyces, Phanerochaete, Ophiostoma, Trichoderma* und *Aspergillus* ausgewählt sind.

12. Formulierung nach irgendeinem der vorhergehenden Ansprüche, worin einer oder mehrere der Mikroorganismen zur Fixierung von Stickstoff imstande ist bzw. sind.

13. Formulierung nach Anspruch 12, worin der oder jeder Stickstoff-fixierende Mikroorganismus aus den Gattungen *Bacillus, Clostridium, Rhizobium* und *Azotobacter* ausgewählt ist.

14. Formulierung nach irgendeinem der Ansprüche 11 bis 13, worin die Mikroorganismen *Thermomonospora fusca* und *Phanerochaete* einschließen.

15. Formulierung nach irgendeinem der vorhergehenden Ansprüche, welche Pilzkomponenten umfaßt, die zur Verdauung von Lignin, Cellulose und/ oder Hemicellulose imstande sind.

16. Verfahren zum Abbau von Material, welches organische Komponenten umfaßt, umfassend die Behandlung des Materials mit einer Formulierung nach irgendeinem der vorhergehenden Ansprüche.

17. Verfahren nach Anspruch 16, worin das zu behandelnde Material Gartenbau- oder Gartenabfall, geschnittenes Gras, Blattabfall, Holzschnitzel, gemischten Haushaltsabfall oder festen Siedlungsabfall umfaßt.

18. Verfahren nach Anspruch 17, worin das Material geschnittenes Gras umfaßt.

## Revendications

1. Formulation liquide comportant:
une ou plusieurs enzymes capables de dégrader de la matière organique;
des spores d'un ou de plusieurs micro-organismes capables de croître sur le ou les produits de la dégradation enzymatique;
un agent qui prévient la germination des spores; et facultativement, un stabilisant d'enzymes.

2. Formulation selon la revendication 1, dans laquelle l'agent empêche la prolifération de cellules végétales de micro-organismes tels que des bactéries, des champignons et des levures.

3. Formulation selon la revendication 1 ou la revendication 2, dans laquelle l'agent est un stabilisant osmotique et/ou un agent bactériostatique.

4. Formulation selon l'une quelconque des revendications précédentes, dans laquelle l'agent et le stabilisant d'enzymes sont choisis parmi des alginates, la carboxyméthylcellulose, la gomme de xanthan, la gomme de guar, le chlorure de sodium, un benzoate, le métabisulfate de (sodium) et le glycérol, dont l'un quelconque peut exercer une action de prévention de la germination des spores et de la dégradation d'enzymes.

5. Formulation selon l'une quelconque des revendications précédentes, qui comporte de plus un, deux ou chacun parmi des sources de carbone, des sources d'azote et des agents de charge inertes.

6. Formulation selon l'une quelconque des revendications précédentes, qui comporte de plus du NH₄SO₄.

7. Formulation selon l'une quelconque des revendications précédentes, dans laquelle les enzymes comprennent une protéase.

8. Formulation selon l'une quelconque des revendications précédentes, dans laquelle les enzymes comprennent une lipase.

9. Formulation selon l'une quelconque des revendications précédentes, dans laquelle les enzymes comprennent une pectinase.

10. Formulation selon l'une quelconque des revendications précédentes, dans laquelle les enzymes comprennent une cellulase et/ou une hémicellulase.

11. Formulation selon l'une quelconque des revendications précédentes, dans laquelle les micro-organismes sont choisis parmi les genres *Azotobacter, Rhizobium, Rhizopus, Thermomonospora, Bacillus, Clostridium, Streptomyces, Phanerochaete, Ophiostoma, Trichoderma et Aspergillus.*

12. Formulation selon l'une quelconque des revendications précédentes, dans laquelle un ou plusieurs des micro-organismes sont capables de fixer l'azote.

13. Formulation selon la revendication 12, dans laquelle le ou que chaque micro-organisme fixant l'azote est choisi parmi les genres *Bacillus, Clostridium, Rhizobium* et *Azotobacter.*

14. Formulation selon l'une quelconque des revendications 11 à 13, dans laquelle les micro-organismes comprennent *Thermomonospora fusca* et *Phanerochaete.*

15. Formulation selon l'une quelconque des revendications précédentes, qui comporte des composants fongiques capables de digérer la lignine, la cellulose et/ou l'hémicellulose.

16. Procédé de dégradation d'une matière comportant des composants organiques, qui comporte le traitement de la matière avec une formulation selon l'une quelconque des revendications précédentes.

17. Procédé selon la revendication 16, dans lequel la matière à traiter comporte des déchets d'horticulture ou de jardin, des tontes d'herbe, des litières de feuilles, des copeaux de bois, des déchets domestiques mixtes ou des déchets municipaux solides.

18. Procédé selon la revendication 17 qui, dans lequel la matière comporte des tontes d'herbe.
